# EUROPÄISCHE PATENTANMELDUNG

(11) **EP 0 889 086 A1**
(43) Veröffentlichungstag der Anmeldung: **07.01.1999**
(21) Anmeldenummer: 98111055.4
(22) Anmeldetag: 17.06.1998
(51) Int. Cl.: C08K 9/08, C09C 3/08, C04B 35/628

(54) **Thermoplastische Formmassen, Verfahren zu deren Herstellung und deren Verwendung**

(30) Priorität: 30.06.1997 DE 19727706
(71) Anmelder: GE Bayer Silicones GmbH & Co. KG, 40699 Erkrath (DE)
(72) Erfinder: Huggins, John, Dr., 51373 Leverkusen (DE)

(57) **Zusammenfassung**

Die vorliegende Erfindung betrifft neue thermoplastische Formmassen, enthaltend mindestens ein beschichtetes Keramikpulver und mindestens ein thermoplastisches Bindemittel oder Bindemittelgemisch, ein Verfahren zu deren Herstellung und deren Verwendung sowie ein Verfahren zur Herstellung von Formteilen aus Keramikpulvern.

## Beschreibung

Die vorliegende Erfindung betrifft neue thermoplastische Formmassen, enthaltend mindestens ein beschichtetes Keramikpulver und mindestens ein thermoplastisches Bindemittel oder Bindemittelgemisch, ein Verfahren zu deren Herstellung und deren Verwendung sowie ein Verfahren zur Herstellung von Formteilen aus Keramikpulvern.

Thermoplastische Formmassen finden unter anderem Anwendung bei Verfahren, wie z.B. thermoplastischem Spritzgießen, bei denen ein temperaturabhängiges Fließverhalten notwendig ist.

Es ist bekannt, daß sinterfähige Keramikpulver zusammen mit thermoplastischen Bindemittel zu Formmassen gemischt und durch Verfahren wie Spritzgießen zu Formteilen verarbeitet werden können (Inter. J. High Technology Ceramics 2 (1986) 1-31).

Im Anschluß an die Formgebung wird das Bindemittel aus dem Formteil entfernt. Dies geschieht entweder bei Temperaturen zwischen 100 und 800°C an Luft oder in einer inerten Atmosphäre bei Überdruck, Normaldruck oder im Vakuum. Zumeist wird das Bindemittel in Luft bei Normaldruck entfernt. Ferner kann das Bindemittel durch Extraktion mit Lösungsmittel oder superkritischen Gasen teilweise oder vollständig entfernt werden.

Anschließend wird das teilweise oder vollständig vom Bindemittel befreite Formteil in der Regel bei Temperaturen von mehr als 800°C gesintert, wobei eine teilweise oder vollständige Verdichtung des Körpers stattfindet.

Um fehlerfreie gesinterte Formteile zu erhalten, müssen die Formmassen einen möglichst hohen Gehalt an keramischem Pulver, vorzugsweise 60 bis 70 Vol-%, besitzen.

Es ist jedoch allgemein bekannt, daß mit steigendem Pulvergehalt die Viskosität der Formmassen bei der Verarbeitungstemperatur ebenfalls ansteigt. Der Viskositätsanstieg bei Ton-haltigen Pulvern mit mittleren Korngrößen von weniger als 5 µm ist besonders ausgeprägt.

Das Spritzgießen von Formmassen mit hohen Verarbeitungsviskositäten hat mehrere Nachteile. Formmassen hoher Viskosität können komplizierte oder dünnwandige Formen sowie Formen mit langen Fließwegen nur schlecht füllen und benötigen einen hohen Einspritz- und Nachdruck beim Spritzgießen. Dabei werden Formteile mit hohen inneren Spannungen erzeugt, die nach dem Sintern Fehler aufweisen.

Um diese Nachteile zu beseitigen wurden unterschiedliche thermoplastische Bindemittel eingesetzt, wie z.B. niedermolekulare Wachse (Am. Ceram. Soc. Bull. 42(1) (1963) 13-19) oder Additive wie Fettsäuren sowie deren Ester (Ceramic Eng. Sci. Proc. 3 (1982) 20-34). Gemäß US-A 4 898 902 werden gesättigte oder ungesättigte Fettsäuren mit 4 bis 30 Kohlenstoffatomen, deren Methyl-, Butyl- oder Sorbitanester sowie deren Calzium-, Magnesium- oder Aluminiumsalze eingesetzt.

US-A 5 491 181 beschreibt der Einsatz von Keramikpulvern, die mit ionischen Dispergatoren auf Organophosphor Basis beschichtet werden, zur Herstellung von niedrigviskosen Spritzgußmassen. Diese beschichteten Keramikpulver werden durch Vermischen einer wäßrigen Lösung des Dispergators mit einer Suspension des Pulvers in Wasser und anschließender Trocknung, z.B. durch Sprühtrocknung, hergestellt. Die bevorzugten Dispergatoren sind die monowertige Salze organomodifizierte Phosphorsäureester, Phosphonosäuren, und Phosphonobutantricarbonsäuren. Die bevorzugten Dispergatoren sind mit C₄ bis C₂₂-Alkylresten modifiziert.

Die in US-A 5 491 181 beschriebene Dispergatoren besitzen den Nachteil, daß die Salze in Wasser nur geringfügig löslich sind. Wäßrige Lösungen mit mehr als 5 % dieser Dispergatoren und C₅ oder höhere Alkylresten sind nicht möglich. Daher muß bei der Herstellung der beschichteten Keramikpulvern große Mengen an Wasser eingesetzt werden, daß die großtechnische Herstellung mittels Sprühtrocknung unwirtschaftlich macht.

Aufgabe der vorliegenden Erfindung war daher die Bereitstellung neuer thermoplastischer Formmassen mit hohem Pulvergehalt und niedriger Verarbeitungsviskosität, die die Nachteile des Standes der Technik nicht aufweisen.

Es wurde nun gefunden, daß bestimmte mit Polyether-modifizierten Phosphorsäureestern beschichtete Keramikpulver diese Anforderung erfüllen und zu thermoplastischen Spritzgußmassen niedriger Viskosität führen. Als besonders vorteilhaft erweist sich dabei, daß die Polyether-modifizierten Phosphorsäureester in Wasser gut löslich sind. Die erfindungsgemäßen Formmassen weisen trotz hoher Gehalte an Ton-haltigen Keramikpulvern noch gute Verarbeitungseigenschaften auf Überraschenderweise ist die Viskosität der erfindungsgemäßen Formmassen nicht nur deutlich niedriger als die Viskosität vergleichbarer Formmassen aus unbeschichteten Pulvern sondern auch deutlich niedriger als die Viskosität von Formmassen aus Pulvern, die mit anderen Wasser-löslichen Dispergatoren beschichtet werden.

Gegenstand der vorliegenden Erfindung sind daher thermoplastische Formmassen enthaltend mindestens ein beschichtetes tonhaltigen Keramikpulver und mindestens ein thermoplastisches Bindemittel, dadurch gekennzeichnet, daß das Keramikpulver mit mindestens einem polyethermodifizierten Phosphorsäureester, Phosphonosäureester oder Phosphonocarbonsäureester und/oder deren Salz beschichtet ist.

Zusätzlich kann die erfindungsgemäße Formmasse andere Hilfsstoffe wie Sinterhilfsmittel und Trennhilfsmittel enthalten.

In einer weiteren Ausführungsform der vorliegenden Erfindung enthält die thermoplastische Formmasse vorzugsweise zusätzlich zu dem beschichteten Keramikpulver und dem thermoplastischen Bindemittel noch mindestens ein Siliconharz.

Bei den Siliconharzen handelt es sich vorzugsweise um Polyorganosiloxane, die eine mehrfach verzweigte Struktur aufweisen. Außerdem sind thermoplastische Siliconharze bzw. Siliconharzgemische mit einer Erweichungstemperatur zwischen 30 und 200°C, insbesondere zwischen 40 und 130°C bevorzugt. Besonders bevorzugt sind thermoplastische Siliconharze, die eine Keramikausbeute (definiert aus der Rest nach der Pyrolyse bis 1000°C an der Luft) von mindestens 70 Gew.-% aufweisen.

Die erfindungsgemäße Formmasse kann auch zusätzlich nicht-beschichtete Pulver enthalten. In einer besonders bevorzugten Ausführungsform enthält die Formmasse zusätzlich nicht-beschichteten kalzinierten Ton, Knochenasche, kalziniertes Porzellan bzw. gemahlenes Porzellan oder Schamotte.

Die polyethermodifizierten Phosphorsäureester, Phosphonosäureester oder Phosphonocarbonsäureester (im folgenden auch Dispergatoren genannt) können dabei sowohl ionisch als auch nichtionisch sein. Bevorzugt sind dabei alle Phosphorsäureester, Phosphonosäureester oder Phosphonocarbonsäureester und deren Salze, die mindestens eine polyethermodifizierte Estergruppe und mindestens einen C₄- bis C₄₀-aliphatischen Rest aufweisen.

Die bevorzugten Polyethetreste können auf Basis von Ethylenoxid, Propylenoxid oder deren Gemische sein. Die bevorzugten aliphatischen Reste können auch Heteroatome, wie z.B. Ether-, Keto- oder Hydroxyl-Gruppen, sowie Kohlenstoff-Kohlenstoff-Mehrfachbindungen enthalten. Beispiele sind 2-Ethylhexyl-, Nonyl-, Decyl-, Isodecyl-, Oleyl- und Octadecyl-Reste.

Die in den erfindungsgemäßen thermoplastischen Formmassen enthaltenen Dispergatoren weisen vorzugsweise mindestens eine Säurefunktion oder mindestens eine neutralisierte Säurefunktion am Phosphor auf Die neutralisierte Säurefunktion kann dabei als Alkali- oder Erdalkalisalz bzw. Ammoniumsalz vorliegen.

Die Neutralisation der Säurefunktion kann sowohl beim Beschichten des Pulvers in Wasser durch Reaktion mit wasserlöslichen Basen als auch durch Reaktion mit basischen Gruppen der keramischen Pulver geschehen.

In einer bevorzugten Ausführungsform der vorliegenden Erfindung weist der polyethermodifizierte Phosphorsäureester die Formel

(A⁺O⁻)ₐ(HO)_{b}P(O)[(OCHR'CH₂)_{d}OR²)]_{c}

auf in der
- a + b: zwischen 1,0 und 2,0 liegt, wobei die Zahlen 1 und 2 eingeschlossen sind,
a+b+c = 3,0,
- d: 1 bis 20,
- A⁺: H⁺ oder ein einwertiges oder zweiwertiges Kation,
- R¹: H oder eine Methylgruppe und
- R²: ein geradkettiger oder verzweigter aliphatischer Rest mit 4 bis 22 C-Atomen ist.

Beispiele der erfindungsgemäßen Dispergatoren sind

(Na⁺O⁻)(HO)P(O)[(OCH₂CH₂)₃OC₈H₁₇)]

(Na⁺O⁻)P(O)[(OCH₂CH₂)₃OC₈H₁₇)]₂,

(HO)₂P(O)[(OCH₂CH₂)₆OC₉H₁₉)],

und/oder

(HO)P(O)[(OCH₂CH₂)₆OC₉H₁₉)]₂.

Bei den polyethermodifizierten Phosphorsäureestern handelt es sich um käuflich erhältliche Produkte.

In einer weiteren bevorzugten Ausführungsform weist der polyethermodifizierte Phosphonosäureester die Formel

(A⁺O⁻)ₐP(O)[(OCHR¹ CH₂)_{b}OR²)]_{c}(R³) auf,

in der
- a: zwischen 1,0 und 2,0 liegt,
- a+c: = 2,0,
- b: 1 bis 20,
- A⁺: H⁺ oder ein einwertiges oder zweiwertiges Kation,
- R¹: H oder eine Methylgruppe,
- R²: ein geradkettiger oder verzweigter aliphatischer Rest mit 4 bis 22 C-Atomen und
- R³: ein geradkettiger oder verzweigter aliphatischer Rest mit 1 bis 22 C-Atomen ist.

In einer weiteren bevorzugten Ausführungsform weist der polyethermodifizierte Phosphonocarbonsäureester die Formel 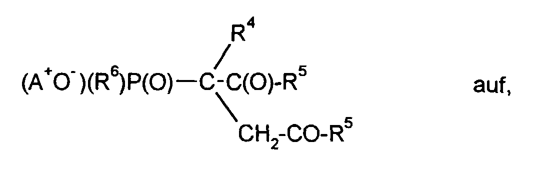 in der
- A⁺: H⁺ oder ein einwertiges oder zweiwertiges Kation,
- R⁴: H oder ein geradkettiger oder verzweigter gegebenenfalls substituierter Alkylrest mit 1 bis 22 C-Atomen und
- R⁵: eine polyethermodifizerte aliphatische Gruppe der allgemeinen Formel

-[(OCHR¹CH₂)_{b}OR²)] ist,
- b: 1 bis 20,
- R¹: H oder Methylgruppe,
- R²: ein geradkettiger oder verzweigter aliphatischer Rest mit 4 bis 22 C-Atomen und
- R⁶: -OH oder R⁵ ist.

Die polyethermodifizierten Phosphonosäureester, Phosphonocarbonsäureester und/oder deren Salze sind erhältlich über die Veresterung der bekannten Phosphonosäuren oder Phosphonocarbonsäuren mit Polyetheralkoholen gemäß Ullmanns Encyclopedia of Industrial Chemistry, 5th Ed, Vol. A19, Seiten 559-563.

Das Keramikpulver ist vorzugsweise ein tonhaltiges Pulver zur Herstellung von Porzellan, Knochenporzellan, Steinzeug, Steingut oder andere silikatische Erzeugnisse. Diese Pulver sind in der Regel Gemische verschiedener mineralischer oder synthetischer Rohstoffen und können neben Tonen auch Quarz, Feldspat oder Knochenasche enthalten. Die Tone können alle Schichtsilikate, wie Kaolinit oder Smectite, sein.

Die Keramikpulver enthalten vorzugsweise nicht kalzinierte Tone, können jedoch auch noch kalzinierte Tone sowie Schamotte oder gemahlenes Porzellan bzw. Produktionsnebenprodukten enthalten.

Bei den thermoplastischen Bindemitteln handelt es sich um Gemische verschiedener thermoplastischer Polymere und Wachse auf organischer Basis und Hilfsstoffen. Bevorzugt sind Bindemittel, die im Gemisch eine Erweichungstemperatur zwischen 40 und 200°C, besonders bevorzugt zwischen 50 und 150°C, aufweisen. Beispiele für bevorzugte thermoplastische Polymere sind Polyethylene, Polystyrol, Polyacrylate, Polyester und Ethylenvinylacetat-Copolymere. Bevorzugt werden auch Wachse aus mineralischen oder natürlichen Vorkommen, wie Paraffinwachs, Montanwachs, Bienenwachs oder Pflanzenwachse und deren Folgeprodukte. Synthetische Wachse wie Fischer-Tropsch-Wachse, Polyethylenwachse und Ethylenvinylacetat-Copolymerwachse sind ebenfalls bevorzugt. Fettsäuren und deren Derivate sind ebenfalls bevorzugt.

Die erfindungsgemäßen thermoplastischen Bindemittel können auch zusätzliche Mengen an Dispergatoren, wie z.B. Stearinsäure, Na-, Ca-, Mg- oder Zn-Stearat oder Polyetheralkohole enthalten. Gegenstand der vorliegenden Erfindung ist zudem ein Verfahren zur Herstellung der erfindungsgemäßen thermoplastischen Formassen, wonach eine Suspension mindestens eines Keramikpulvers in Wasser mit mindestens einem der erfindungsgemäßen polyethermodifizierten Phosphorsäureester, einem Phosphonosäureester, einem Phosphonocarbonsäureester und/oder deren Salzen (Dispergator) versetzt und anschließend getrocknet und im Anschluß daran mit thermoplastischem Bindemittel vermischt wird. Der Dispergator kann entweder als wäßrige Lösung oder unverdünnt eingesetzt werden. Der Dispergator wird vorzugsweise in Mengen von 0,25 bis 3,0 %, besonders bevorzugt 0,5 bis 1,5 %, bezogen auf dem Trockengewicht des Pulvers, eingesetzt.

Die Trocknung der Suspension kann beispielsweise durch Sprühtrocknung an der Luft geschehen.

Bei dem erfindungsgemäßen Verfahren können auch noch Hilfsmittel, wie zum Beispiel Verflüssiger oder Entschäumer, der Suspension zugesetzt werden. Bekannte Verflüssiger sind Natriumsilikat, Polyphosphate und dergleichen.

Die erfindungsgemäßen thermoplastischen Formmassen enthalten vorzugsweise neben dem beschichteten tonhaltigen Keramikpulver mindestens soviel Bindemittel, Siliconharz und Hilfsstoffe, wie notwendig ist, um eine thermoplatische verarbeitbare Masse zu erhalten. In der Regel müssen Bindemittel, Siliconharz und Hilfsstoffe mindestens das freie Volumen zwischen den Pulverpartikel in der Formmasse ausfüllen. Je nach Pulverdichte sowie deren Kornform und Korngrößenverteilung sind dafür unterschiedlichen Mengen notwendig. Erfahrungsgemäß sind 30 bis 50 Vol-% Bindemittel, Siliconharz und Hilfsstoffe notwendig. Besonders bevorzugt sind Formmassen mit mindestens 60 Vol-% beschichtetem Keramikpulver enthalten.

Die erfindungsgemäßen thermoplastische Formmassen werden dabei vorzugsweise durch Mischen der Komponenten bei einer Temperatur oberhalb der Erweichungstemperatur des Bindemittels hergestellt. Es ist vorteilhaft, beim Mischen hohe Scherkräfte anzuwenden, um Pulveraggregate zu zerkleinern und dadurch eine homogene Mischung zu erhalten. Geeignete Mischaggregate sind zum Beispiel Kneter, Extruder oder Walzwerke. Die Formmassen können entweder direkt verwendet oder zuerst zu Pulvern oder Granulaten verarbeitet werden.

Die erfindungsgemäßen thermoplastischen Formmassen besitzen ausgezeichnete Eigenschaften für die thermoplastische Formgebung, wie zum Beispiel durch Spritzgießen oder Extrudieren. Formmassen, die erfindungsgemäßen beschichteten tonhaltigen Keramikpulver enthalten, sind von niedrigerer Viskosität bei der Verarbeitungstemperatur als Formmassen, die unbeschichtete Pulver enthalten. Die niedrigere Viskosität der erfindungsgemäßen Formmassen führt zu verbesserte Verarbeitungseigenschaften, wie niedrigeren Einspritzdruck oder weniger Abrieb. Anderenfalls kann die erfindungsgemäßen Formmasse bei gleicher Viskosität mehr Keramikpulver enthalten. Die notwendige Scherenergie beim Mischen der Formmasse, in z.B. einem Extruder, kann auch gesenkt werden und dadurch der Durchsatz gesteigert und Abrieb reduziert werden.

Gegenstand der vorliegenden Erfindung ist zudem ein Verfahren zur Herstellung von Keramik-Formkörpern durch Formgebung der erfindungsgemäßen Formmasse, Entfernen des Bindemittels durch Brennen an der Luft und Sintern. Das Brennen erfolgt vorzugsweise zwischen 100 und 600°C.

Ein weiterer Gegenstand der Erfindung ist zudem die Verwendung der erfindungsgemäßen thermoplastischen Formmasse zur Herstellung von Keramik-Formteilen, insbesondere üblichen Gebrauchsgegenständen, wie Tassen, aus Porzellan, Knochenporzellan, Steingut oder Steinzeug.

Die Erfindung wird anhand der folgenden Beispiele weiter beschrieben ohne dabei auf diese beschränkt zu sein.

### Ausführungsbeispiele

Die folgenden Substanzen wurden in den Beispielen eingesetzt:

### Dispergator A

Ein neutralisiertes polyethermodifiziertes 50:50 Gemisch von Phosphorsäureestern der Formel

(Na⁺O⁻)(HO)P(O)[(OCH₂CH₂)₃OC₈H₁₇)]

und

(Na⁺O⁻)P(O)[(OCH₂CH₂)₃OC₈H₁₇)]₂

Dispergator A wurde dabei als 50 %-ige wäßrige Lösung eingesetzt. Das neutralisierte Phosphorsäureestergemisch ist als 85 %-ige Lösung von der Firma Servo Delden BV, Delden NL, unter der Bezeichnung Servoxyl VPT 3/85 erhältlich.

### Dispergator B

Ein neutralisiertes polyethermodifiziertes 50:50 Gemisch von Phosphorsäureestern der Formel

(Na⁺O⁻)(HO)P(O)[(OCH₂CH₂)₆ OC₁₀H₂₁)]

und (

Na⁺O⁻)P(O)[(OCH₂CH₂)₆OC₁₀H₂₁)]₂

Dispergator B wurde als 25 %-ige wäßrige Lösung eingesetzt. Die Lösung wurde durch Neutralisation der entsprechenden Säuregemische mit Natronlauge in Wasser hergestellt. Das Phosphorsäureestergemisch ist als 100 %-ige Flüssigkeit von der Firma Servo Delden BV, Delden NL, unter der Bezeichnung Servoxyl VPDZ 6/100 erhältlich.

### Knochenporzellanpulver

Ein Knochenporzellanpulver der Firma Jesse Shirley & Sons Ltd., Stoke-on-Trent, GB, daß etwa 50 % Knochenasche, etwa 25 % kaolinischer Tone und 25 % Quarz und Feldspat enthält.

### Bindemittel S

Ein Siliconharz-haltiges Bindemittel der Firma Bayer AG, Deutschland, erhältlich unter der Bezeichnung Bayceram® PIM VPAI 3588. Bindemittel S hat eine Erweichungstemperatur von 94-100°C, eine Dichte bei 25°C von 0,97 g/ml und eine Viskosität von ca. 2000 mPa*s bei 130°C.

### Beispiel 1

Zu 1,95 kg Wasser wurden 10,35 kg Knochenporzellanpulver als feuchter Filterkuchen (Restfeuchte 3,5 %) nach und nach zugemischt, um eine dickflüssige Suspension herzustellen. Die Suspension wurde 30 Minuten gerührt. Anschließend wurde unter ständigem Rühren 200 g einer 50 % Lösung von Dispergator A in Wasser zugetropft. Die Suspension wurde weitere 30 Minuten gerührt und dann auf Blechen 12 h bei 50°C und 6 h bei 120°C getrocknet.

In einem Zweiwellen-Extruder, Modell ZSK 25 der Firma Werder und Pfleiderer, Stuttgart, Deutschland, wurden 8,4 kg beschichtetes Keramikpulver mit 1,6 kg thermoplastischem Bindemittel S vermischt und beim Austritt aus dem Extruder granuliert. Der Extruder wurde bei einer Temperatur von 110°C, eine Drehzahl von 120 upm und einem Durchsatz von 15 kg/h betrieben.

Die Mischung war homogen vermischt und hatte gute Verarbeitungseigenschaften. Die Viskosität der Masse wurde in einem Kapillar-Rheometer der Firma Göttfert bei 130°C gemessen. Die Ergebnisse sind in Tabelle 1 zusammengefaßt.

Die Mischung konnte mittels thermoplastischem Spritzgießen zu Porzellantassen hoher Qualität verarbeitet werden. Beim Spritzgießen wurde eine Zylindertemperatur von 160°C, eine Formtemperatur von 60°C, eine Nachdruckzeit von 4 s bei 250 bar und eine Zykluszeit von 30 s verwendet. Nach dem Entfernen des Bindemittels bei Temperaturen bis 400°C und Sintern bei 1230°C wurden Tassen von hoher Qualität erhalten. Insbesondere die Ausformung der Rand und Henkel war fehlerfrei.

### Beispiel 2

Wie in Beispiel 1 wurde eine Suspension von 10,35 kg Knochenporzellanpulver als Filterkuchen mit 1,85 kg Wasser zu einer Suspension verarbeitet. Dann wurde 300 g einer 50 %-ige Lösung von Dispergator A in Wasser zugemischt und das Pulver getrocknet.

In einem Zweiwellen-Extruder wurden 8,4 kg beschichtetes Keramikpulver mit 1,6 kg thermoplastischem Bindemittel S vermischt und beim Austritt aus dem Extruder granuliert.

Die Mischung war homogen vermischt und hatte gute Verarbeitungseigenschaften. Die Viskosität der Masse wurde in einem Kapillar-Rheometer bei 130°C gemessen. Die Ergebnisse sind im Tabelle 1 zusammengefaßt.

Die Mischung konnte mittels thermoplastischem Spritzgießen zu Porzellantassen hoher Qualität verarbeitet werden. Nach dem Entfernen des Bindemittels bei Temperaturen bis 400°C und Sintern bei 1230°C wurden Tassen von hoher Qualität erhalten. Insbesondere die Ausformung von Rand und Henkel war fehlerfrei.

### Beispiel 3

Wie in Beispiel 1 wurde eine Suspension von 10,35 kg Knochenporzellanpulver als Filterküchen mit 1,85 kg Wasser zu einer Suspension verarbeitet. Dann wurde 400 g einer 25 %-ige Lösung von Dispergator B in Wasser zugemischt und das Pulver getrocknet.

In einem Zweiwellen-Extruder wurden 8,4 kg beschichtetes Keramikpulver mit 1,6 kg thermoplastischem Bindemittel S vermischt und beim Austritt aus dem Extruder granuliert.

Die Mischung war homogen vermischt und hatte gute Verarbeitungseigenschaften. Die Viskosität der Masse wurde in einem Kapillar-Rheometer bei 130°C gemessen. Die Ergebnisse sind im Tabelle 1 zusammengefaßt.

Die Mischung konnte mittels thermoplastischem Spritzgießen zu Porzellantassen hoher Qualität verarbeitet werden. Nach dem Entfernen des Bindemittels bei Temperaturen bis 400°C und Sintern bei 1230°C wurden Tassen von hoher Qualität erhalten. Insbesondere die Ausformung von Rand und Henkel war fehlerfrei.

### Vergleichsbeispiel 4

Es wurde wie in Beispiel 1 8,4 kg unbeschichtetes Knochenporzellanpulver mit 1,6 kg Bindemittel S in einem Extruder vermischt und granuliert.

Die Mischung war makroskopisch homogen, jedoch wurde bei der Viskositätsmessung im Kapillar-Rheometer ein unruhiges Fließen beobachtet, das auf eine nicht ausreichende Zerkleinerung der Pulveraggregate zurückzuführen war.

Die Mischung konnte wegen zu hoher Viskosität nur schlecht mittels thermoplastischem Spritzgießen verarbeitet werden. Die Herstellung von Porzellantassen ohne Fehler war nicht möglich. Die Tassen-Spritzlinge wiesen eine fehlerhaften Ausformung von Rand und Henkel auf.

### Vergleichsbeispiel 5

Es wurde wie in Vergleichsbeispiel 4 8,3 kg unbeschichtetes Knochenporzellanpulver mit 1,7 kg Bindemittel S in einem Extruder vermischt und granuliert.

Die Mischung war makroskopisch homogen und bei der Viskositätsmessung im Kapillar-Rheometer wurde ein ruhiges Fließen beobachtet.

Die Mischung konnte wegen hoher Viskosität nur mit Schwierigkeiten mittels thermoplastischem Spritzgießen verarbeitet werden. Die Herstellung von Porzellantassen war möglich, jedoch wiesen die Tassen-Spritzlinge nach der Entfernung des Bindemittels und anschließendem Sintern eine fehlerhafte Ausformung von Rand und Henkel auf Insbesondere wurden mehrfach Risse am Tassenrand und Henkel beim Entfernen des Bindemittels der Tassen beobachtet, die nur durch sehr langsame Temperaturerhöhung vermieden werden konnten.

**Tabelle 1**

| Viskosität der Formmassen bei 130°C | | | | | |
|---|---|---|---|---|---|
| Beispiel | Dispergator | Gew.-% Bindemittel | Viskosität* bei 5/s in Pa*s | Viskosität* bei 100 /s in Pa*s | Bemerkungen |
| 1 | 1 % Disp. A | 16 % | 4341 | 721 | ruhiges Fließen |
| 2 | 1,5 % Disp A | 16 % | 3094 | 592 | ruhiges Fließen |
| 3 | 1 % Disp B | 16 % | 3660 | 647 | ruhiges Fließen |
| 4# | ohne | 16 % | 16830 | 1108 | unruhiges Fließen |
| 5# | ohne | 17 % | 6244 | 713 | ruhiges Fließen |

| | | | | | |
|---|---|---|---|---|---|
| * bei 130°C bei Schergeschwindigkeit in 1/s | | | | | |
| # Vergleichsbeispiele | | | | | |

### Beispiel 6

Wie in Beispiel 1 wurde eine Suspension von 2,5 kg Knochenporzellanpulver als Filterkuchen mit 1,0 kg Wasser zu einer Suspension verarbeitet. Dann wurden 100 g einer 25 %igen Lösung eines nicht neutralisierten 50:50 Gemischs von Polyethermodifizierten Phosphorsäureestern der Formel

(HO)₂P(O)[(OCH₂CH₂)₆OC₁₀H₂₁)]

und

(HO)P(O)[(OCH₂CH₂)₆OC₁₀H₂₁)]₂

in Wasser zugemischt und das Pulver getrocknet.

In einem Z-Kneter wurden 262 g beschichtetes Keramikpulver mit 50 g thermoplastisches Bindemittel S (16 % Binder) 30 Minuten bei 120°C vermischt und anschließend granuliert.

Die Mischung war homogen und hatte gute Verarbeitungseigenschaften. Die Viskosität der Masse wurde in einem Kapillar-Rheometer bei 130°C gemessen. Das Ergebnis ist in der Tabelle 2 zusammengefaßt.

### Vergleichsbeispiel 7

Wie in Beispiel 6 wurde eine Suspension von 2,5 kg Knochenporzellanpulver als Filterkuchen mit 1,0 kg Wasser zu einer Suspension verarbeitet. Dann wurden 100 g einer 25 %igen Lösung von Triton X-405, ein Oktylphenolethoxylat der Firma Union Carbide Corp., in Wasser zugemischt und das Pulver getrocknet.

In einem Z-Kneter wurden 262 g beschichtetes Keramikpulver mit 50 g thermoplastisches Bindemittel S (16 % Binder) 30 Minuten bei 120°C vermischt und anschließend granuliert.

Die Mischung war homogen. Die Viskosität der Masse wurde in einem Kapillar-Rheometer bei 130°C gemessen. Das Ergebnis ist in der Tabelle 2 zusammengefaßt. Die Viskosität der Masse war geringfügig niedriger als die für Massen mit unbeschichtetem Keramikpulver, jedoch deutlich höher als die für Massen mit erfindungsgemäß beschichtetem Keramikpulver.

### Vergleichsbeispiel 8

Wie in Beispiel 7 wurde eine Suspension von 2,5 kg Knochenporzellanpulver als Filterkuchen mit 1,0 kg Wasser zu einer Suspension verarbeitet. Dann wurden 100 g einer 25 %ige Lösung von Tergitol 7, Natrium-Heptadecylsulfat der Firma Union Carbide Corp., in Wasser zugemischt und das Pulver getrocknet.

In einem Z-Kneter wurden 262 g beschichtetes Keramikpulver mit 50 g thermoplastischem Bindemittel S (16 % Binder) 30 Minuten bei 120°C vermischt und anschließend granuliert.

Die Mischung war homogen. Die Viskosität der Masse wurde in einem Kapillar-Rheometer bei 130°C gemessen. Das Ergebnis ist in der Tabelle 2 zusammengefaßt. Die Viskosität der Masse war ebenfalls höher als die für Massen mit erfindungsgemäß beschichtetem Keramikpulver.

**Tabelle 2**

| Viskosität der Formmassen bei 130°C | | | |
|---|---|---|---|
| Beispiel | Dispergator | Gew.-% Bindemittel | Viskosität* in Pa*s bei 100/s |
| 6 | 1 % Servoxyl DZ 6/100 | 16 % | 642 |
| 7# | 1 % Triton X-405 | 16 % | 818 |
| 8# | 1 % Tergitol 7 | 16 % | 858 |

| | | | |
|---|---|---|---|
| * bei 130°C bei Schergeschwindigkeit in 1/s | | | |
| # Vergleichsbeispiele | | | |

## Patentansprüche

1. Thermoplastische Formmassen, enthaltend mindestens ein beschichtetes tonhaltiges Keramikpulver und mindestens ein thermoplatisches Bindemittel, dadurch gekennzeichnet, daß das Keramikpulver mit mindestens einem polyethermodifizierten Phosphorsäureester, Phosphonosäureester, Phosphonocarbonsäureester und/oder deren Salz beschichtet ist.

2. Thermoplastische Formmasse nach Anspruch 1, enthaltend zusätzlich mindestens ein Siliconharz.

3. Thermoplastische Formmasse nach Anspruch 1 oder 2, dadurch gekennzeichnet, daß die polyethermodifizierten Phosphorsäureester, Phosphonsäureester, Phosphonocarbonsäureester und/oder deren Salze mindestens einen C₄- bis C₄₀-aliphatischen Rest aufweisen.

4. Thermoplastische Formmassen nach einem oder mehreren der Ansprüche 1 bis 3, dadurch gekennzeichnet, daß der polyethermodifizierte Phosphorsäureester die Formel
(A⁺O⁻)ₐ(HO)_{b}P(O)[(OCHR¹ CH₂)_{d}OR²)]_{c}
aufweist, in der
a + b zwischen 1,0 und 2,0 liegt,
a+b+c = 3,0,
d 1 bis 20,
A⁺ H⁺ oder ein einwertiges oder zweiwertiges Kation,
R¹ H oder eine Methylgruppe und
R² ein geradkettiger oder verzweigter aliphatischer Rest mit 4 bis 22 C-Atomen ist.

5. Thermoplastische Formmassen nach einem oder mehreren der Ansprüche 1 bis 3, dadurch gekennzeichnet, daß der polyethermodifizierte Phosphonosäureester die Formel
(A⁺O⁻)ₐP(O)[(OCHR¹CH₂)_{b}OR²)]_{c}(R³) aufweist,
in der
a zwischen 1,0 und 2,0 liegt,
a+c = 2,0,
b 1 bis 20,
A⁺ H⁺ oder ein einwertiges oder zweiwertiges Kation,
R¹ H oder eine Methylgruppe,
R² ein geradkettiger oder verzweigter aliphatischer Rest mit 4 bis 22 C-Atomen und
R³ ein geradkettiger oder verzweigter aliphatischer Rest mit 1 bis 22 C-Atomen ist.

6. Thermoplastische Formmassen nach einem oder mehreren der Ansprüche 1 bis 3, dadurch gekennzeichnet, daß der polyethermodifizierte Phosphonocarbonsäureester die Formel 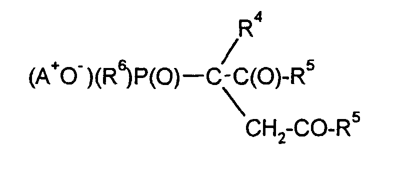 aufweist, in der
A⁺ H⁺ oder ein einwertiges oder zweiwertiges Kation,
R⁴ H oder ein geradkettiger oder verzweigter gegebenenfalls substituierter Alkylrest mit 1 bis 22 C-Atomen und
R⁵ eine polyethermodifizerte aliphatische Gruppe der allgemeinen Formel
-[(OCHR¹ CH₂)_{b}OR²)] ist,
b 1 bis 20,
R¹ H oder Methylgruppe,
R² ein geradkettiger oder verzweigter aliphatischer Rest mit 4 bis 22 C-Atomen und
R⁶ -OH oder R⁵ ist.

7. Verfahren zur Herstellung von thermoplastischen Formmassen nach einem oder mehreren der Ansprüche 1 bis 6, dadurch gekennzeichnet, daß eine Suspension mindestens eines Keramikpulvers in Wasser mit mindestens einem polyethermodifizierten Phosphorsäureester, einer Phosphonosäureester, einem Phosphonocarbonsäureester und/oder deren Salzen vermischt und anschließend getrocknet und im Anschluß daran mit thermoplastischem Bindemittel vermischt wird.

8. Verfahren zur Herstellung von Keramik-Formkörpern durch Formgebung der thermoplastischen Formmasse nach einem oder mehreren der Ansprüche 1 bis 6, Entfernen des Bindemittels durch Brennen an der Luft und Sintern.

9. Verwendung der thermoplastischen Formmassen nach einem oder mehreren der Ansprüche 1 bis 6 zur Herstellung von Keramik-Formteilen.
